# FASCICULE DE BREVET EUROPEEN

(11) **EP 1 256 095 B1**
(45) Date de publication et mention de la délivrance du brevet: **22.09.2004**
(21) Numéro de dépôt: 01903913.0
(22) Date de dépôt: 11.01.2001
(51) Int. Cl.: G06K 19/07

(54) **PUCE ELECTRONIQUE POUR OBJET PORTATIF**
ELEKTRONISCHER CHIP FÜR EINEN TRAGBAREN GEGENSTAND
ELECTRONIC CHIP FOR A PORTABLE OBJECT

(30) Priorité: 12.01.2000 FR 0000320
(43) Date de publication de la demande: 13.11.2002
(73) Titulaire: Axalto S.A., 92120 Montrouge (FR)
(72) Inventeur: MAYANCE, Frédéric (C/O Schlumberger Systèmes), 92542 Montrouge Cedex (FR)
(74) Mandataire: den Braber, Gerard Paul
(86) Numéro de dépôt international: PCT/FR2001/000076
(87) Numéro de publication internationale: WO 2001/052186

(56) Documents cités:
- FR-A- 2 705 811
- US-A- 4 803 351
- US-A- 5 577 195
- RANKL W ET AL: "Handbuch der Chipkarten" , DE,MUNCHEN, CARL HANSER VERLAG XP002146368 ISBN: 3-446-18893-2 page 174 -page 177 figure 6.28

## Description

La présente invention concerne, de manière générale, une puce électronique pour un objet portatif, tel qu'une carte à puce.

Les cartes à puce connaissent actuellement un large succès. Elles sont utilisées dans des domaines aussi divers que la banque, la santé, la téléphonie, etc. La puce électronique qu'elles comportent incorpore une ou plusieurs mémoires, permettant de stocker des données propres à l'utilisateur de la carte, telles que le numéro d'un compte bancaire, le numéro de sécurité sociale de l'utilisateur, le nombre d'unités téléphoniques restantes, etc.

Certaines cartes à puces, en particulier celles utilisées dans le domaine bancaire, comprennent un circuit de traitement, du type microprocesseur, comportant un code source capable d'effectuer des opérations relativement complexes. Ces opérations consistent par exemple à mettre en oeuvre des algorithmes de chiffrement pour protéger des informations secrètes contenues dans la carte, ou à organiser des fichiers de données. Généralement, de telles opérations sont effectuées suite à l'envoi d'une commande par un terminal de lecture et/ou d'écriture de la carte.

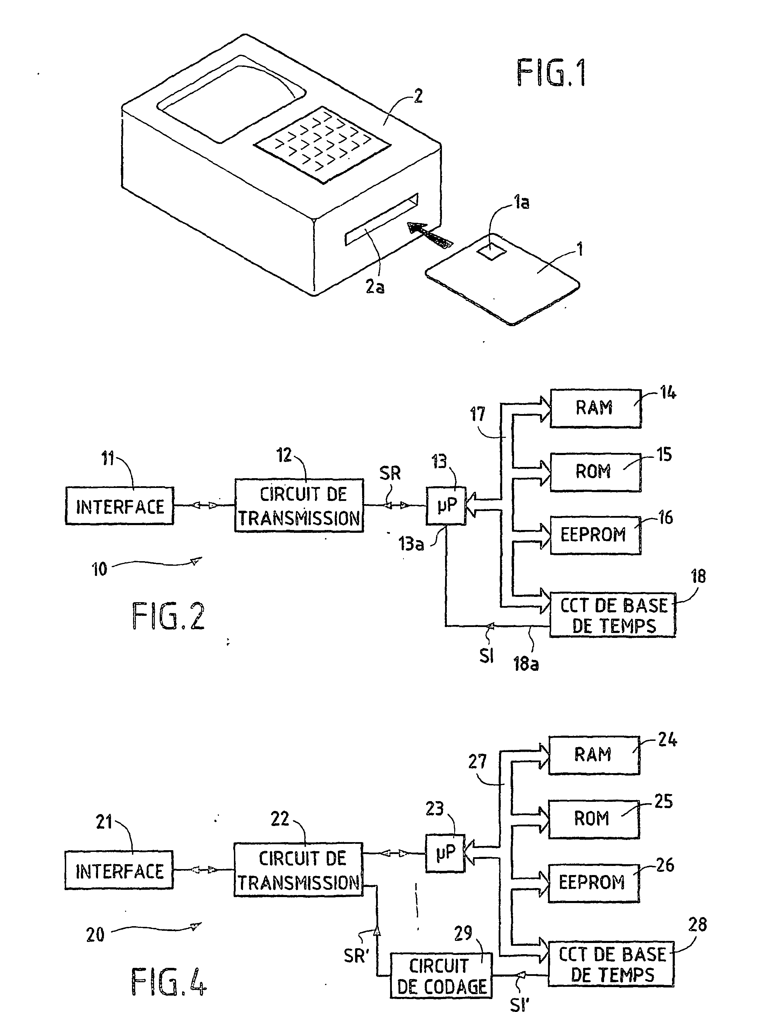

La figure 1 illustre une carte à puce 1, comportant une puce électronique 1a, destinée à coopérer avec un terminal ou dispositif de lecture et/ou d'écriture 2. Le terminal 2 est capable de communiquer avec la puce électronique 1a, pour notamment lire ou écrire des données dans celle-ci, lorsque la carte 1 est introduite dans une fente 2a du terminal prévue à cet effet. Le terminal 2 alimente en outre la puce 1a en énergie électrique.

Ainsi, une fois la liaison établie entre la puce 1a et le terminal 2, ce dernier peut envoyer une commande à la puce, telle qu'une commande de lecture, pour lui faire exécuter un traitement particulier. Cependant, après l'envoi de la commande, le terminal 2 s'attend à ce que la puce 1a lui réponde dans un intervalle de temps donné. Si, à l'expiration de cet intervalle de temps, le terminal 2 n'a reçu aucune réponse de la puce 1a, il considère généralement que celle-ci ne fonctionne plus ou qu'elle a été retirée du terminal. La norme ISO 7816-3, relative au protocole de transmission pour les cartes à puces, définit un "temps d'attente de travail", correspondant au temps maximum alloué à la carte à puce pour répondre au terminal. Avant l'expiration de ce temps d'attente de travail, la carte a la possibilité, si elle est encore en train d'exécuter un traitement, d'émettre un octet de relance, afin d'indiquer au terminal qu'elle est toujours fonctionnelle. Une fois l'octet de relance reçu par le terminal, la carte dispose d'un nouvel intervalle de temps avant de répondre, et peut émettre d'autres caractères de relance si nécessaire.

Dans les cartes à puce conventionnelles, l'opération d'envoi des octets de relance est programmée dans le microprocesseur. Pour ce faire, des commandes sont insérées à des endroits spécifiques dans le code source à exécuter par le microprocesseur. Lorsque, au cours d'un traitement donné, le microprocesseur détecte l'une des ces commandes, il interrompt ledit traitement pour envoyer un octet de relance à destination du terminal.

Cette technique présente un inconvénient majeur, en ce qu'il est nécessaire de prévoir à l'avance, c'est-à-dire lors de l'écriture du code source, le temps requis pour chaque opération que doit effectuer le microprocesseur. Si, par exemple, les commandes spécifiques sont trop espacées les unes des autres dans le code source, le temps de réponse maximum autorisé par la norme ISO 7816-3 peut être dépassé lors d'un traitement dont la durée d'exécution se révèle plus longue que prévue. Dans un tel cas, le risque est grand que le terminal, considérant que la carte à puce ne fonctionne pas, coupe l'alimentation électrique de cette dernière, ce qui peut entraîner des pertes de données ou de fichiers dans la carte. Si, au contraire, les commandes spécifiques sont trop proches les unes des autres dans le code source, le microprocesseur est obligé d'interrompre le traitement un nombre important de fois, ce qui réduit la rapidité d'exécution de la carte.

Or, en général, il est extrêmement difficile d'estimer le temps nécessaire à l'exécution du code source par le microprocesseur de la carte, ce temps dépendant le plus souvent de conditions initiales variables.

On comprend, dans ce contexte, qu'il existe un besoin pour une puce électronique capable de répondre de manière fiable à un terminal dans un intervalle de temps qui lui est alloué, et ce sans affecter dans une trop grande mesure la rapidité du ou des traitements mis en oeuvre par la puce.

La présente invention vise, en particulier, à fournir une puce électronique adaptée pour combler ce besoin.

A cette fin, il est prévu une puce électronique comprenant une , interface lui permettant de communiquer avec un terminal, et un circuit de traitement capable d'effectuer un traitement après mise en communication de la puce et du terminal, caractérisée en ce qu'elle comprend en outre un circuit de base de temps, relié au circuit de traitement, pour produire un premier signal à au moins un instant donné si, à cet instant, ledit traitement n'est pas encore terminé, et un moyen pour transmettre vers l'interface, en réponse au premier signal, un second signal, destiné à indiquer au terminal que la puce est en fonctionnement.

Ainsi, selon la présente invention, le ou les instants auxquels un signal de relance doit être envoyé au terminal sont déterminés par un circuit de base de temps distinct du circuit de traitement. De cette manière, ces instants sont indépendants de la durée du traitement mis en oeuvre par le circuit de traitement, de sorte que le terminal recevra à temps des signaux de relance quelle que soit la complexité de ce traitement.

En pratique, le circuit de traitement est adapté pour activer le circuit de base de temps sensiblement au début du traitement. Par "sensiblement au début", on entend que le circuit de traitement est activé peu de temps avant ou après que le circuit de traitement commence à exécuter le traitement. De façon comparable, le circuit de traitement est adapté pour désactiver le circuit de base de temps sensiblement à la fin du traitement.

Typiquement, entre le moment où il est activé par le circuit de traitement et le moment où il est désactivé, le circuit de base de temps produit le premier signal de manière périodique. La période de temps entre deux émissions successives, par le circuit de base de temps, du premier signal est inférieure à un temps de réponse prédéterminé, alloué à la puce électronique pour répondre au terminal.

Selon un premier mode de réalisation de la présente invention, le moyen pour transmettre le second signal vers l'interface comprend le circuit de traitement, relié au circuit de base de temps de telle manière à pouvoir recevoir le premier signal. Le circuit de traitement interrompt le traitement en réponse à la réception du premier signal, envoie le second signal vers l'interface, et reprend ensuite le traitement.

Selon un second mode de réalisation de la présente invention, le moyen pour transmettre le second signal vers l'interface est distinct du circuit de traitement, et comprend par exemple un circuit de codage pour convertir le premier signal, reçu du circuit de base de temps, en un signal reconnaissable par le terminal, constituant le second signal. En variante, le circuit de base de temps et le circuit de codage forment un même circuit de sorte que le second signal est identique au premier signal.

De préférence, le second signal se présente sous la forme d'un groupe fini d'éléments binaires, tel qu'un octet.

Le circuit de traitement est typiquement un microprocesseur. Le circuit de base de temps est ainsi relié à un bus de la puce, auquel sont également connectés le microprocesseur et des mémoires associées à ce dernier. Selon l'invention, le circuit de base de temps est également relié au microprocesseur par une ligne directe, apte à transmettre le premier signal du circuit de base de temps au microprocesseur, et connectée, au niveau du microprocesseur, à une entrée d'interruption.

La présente invention concerne également une carte à puce comprenant la puce électronique telle que définie ci-dessus.

Selon un autre aspect de l'invention, il est prévu un procédé pour transmettre un signal de relance à un terminal à partir d'une puce électronique, ladite puce électronique comprenant un moyen lui permettant de communiquer avec le terminal et un circuit de traitement, le procédé étant caractérisé en ce qu'il comprend les étapes suivantes : mettre en communication la puce électronique et le terminal, produire un premier signal à partir d'un circuit de base de temps relié au circuit de traitement, à au moins un instant donné au cours d'un traitement effectué par le circuit de traitement, et transmettre vers le terminal, en réponse au premier signal, un second signal, destiné à indiquer au terminal que la puce est en fonctionnement.

D'autres caractéristiques et avantages de la présente invention apparaîtront à la lecture de la description détaillée suivante de plusieurs modes de réalisation, faite en référence aux dessins annexés dans lesquels :
- la figure 1, déjà commentée, montre une carte à puce et un terminal de lecture de cartes à puce ;
- la figure 2 est un bloc-diagramme montrant les circuits électroniques essentiels d'une puce électronique pour carte à puce, selon un premier mode de réalisation de l'invention ;
- la figure 3 est un organigramme d'un procédé mis en oeuvre selon le premier mode de réalisation de l'invention ;
- la figure 4 est un bloc-diagramme montrant les circuits électroniques essentiels d'une puce électronique pour carte à puce, selon un second mode de réalisation de l'invention ; et
- la figure 5 est un organigramme d'un procédé mis en oeuvre selon le second mode de réalisation de l'invention.

En référence à la figure 2, une puce électronique 10 pour carte à puce selon un premier mode de réalisation de l'invention comprend notamment une interface 11, un circuit de transmission 12, un microprocesseur 13 et des mémoires 14, 15, 16. Les mémoires 14, 15, 16 consistent respectivement en une mémoire vive de type RAM (Random Access Memory), une mémoire morte ROM (Read Only Memory) et une mémoire non volatile programmable effaçable de type EEPROM (Electrically Erasable Programmable Read Only Memory).

L'interface 11 est typiquement constituée par des contacts électriques destinés à coopérer avec des contacts électriques correspondants (non représentés) d'un terminal lecteur de cartes à puce. En variante toutefois, elle peut comprendre des moyens d'émission/réception radiofréquence pour l'échange de données avec des moyens d'émission/réception correspondants prévus dans le terminal. L'interface 11 permet la mise en communication du terminal avec la puce électronique 10, lorsqu'une carte à puce incorporant ladite puce 10 est introduite dans le terminal de la manière illustrée à la figure 1, ou passée dans le champ électromagnétique du terminal.

Le circuit de transmission 12 assure la gestion du protocole de communication entre le terminal et la puce 10. Ce circuit est connu de l'homme du métier, et ne sera donc pas décrit en détail.

Le microprocesseur 13 a pour fonction d'exécuter un programme de traitement et de gestion de la puce, appelé "système opératoire" ou "système d'exploitation", se présentant sous la forme d'un code source stocké dans la mémoire morte 15. Le système opératoire est capable de mettre en oeuvre, outre les algorithmes de base de gestion de la puce, des opérations ou traitements complexes. Ces opérations ou traitements complexes sont typiquement effectués sur commande du terminal. Toutefois, il peut être envisagé que la puce agisse de manière active après sa mise en communication avec le terminal, pour effectuer de sa propre initiative une opération complexe.

Par "opération complexe", on entend une opération spécifique dont l'exécution est susceptible de durer plus longtemps que le temps de réponse alloué à la puce après l'envoi de la commande par le terminal ou, lorsque la puce est active, après l'établissement de la communication entre la puce et le terminal. A titre d'exemple, un algorithme de chiffrement pour protéger des données secrètes contenues dans la mémoire non volatile effaçable 16 peut constituer une telle opération complexe. De même, une routine d'organisation de fichiers pour, par exemple, mettre à jour une arborescence de fichiers également stockés dans la mémoire non volatile effaçable 16 peut requérir un temps de travail plus long que le temps de réponse alloué à la puce. Le système opératoire est typiquement composé d'un programme principal et de sous-programmes. Chaque opération complexe est mise en oeuvre par un sous-programme correspondant.

La mémoire vive 14 sert principalement à mémoriser temporairement des données lors de l'exécution par le microprocesseur 13 du système opératoire. Les mémoires 14, 15 et 16 échangent des informations avec le microprocesseur par l'intermédiaire d'un bus de données 17.

Conformément à la présente invention, la puce électronique 10 comporte en outre un circuit de base de temps 18 (en anglais : timer), relié au bus 17 et, par l'intermédiaire d'une liaison directe 18a, directement au microprocesseur 13. Le circuit de base de temps 18 est un circuit de type connu, par exemple le circuit "ST 19" commercialisé par la société ST Microelectronics.

Un circuit de base de temps est, de manière générale, capable de déclencher des événements à des instants précis. Selon la présente invention, le circuit 18 est utilisé pour produire périodiquement un signal dit d"'interruption" SI, qui est transmis au microprocesseur 13 par la liaison directe 18a. Le signal d'interruption SI consiste typiquement en un groupe fini d'éléments binaires (ou bits), tel qu'un octet. La période de temps entre deux signaux SI successifs est sensiblement inférieure au temps de réponse qui est alloué à la puce électronique. Par exemple, si le temps de réponse alloué à la puce électronique est de 1 seconde, ladite période entre deux signaux SI successifs peut être de 900 ms.

Le circuit de base de temps 18 est activé par le microprocesseur 13 avant le début, ou au début, de chaque opération complexe à effectuer, et désactivé par ce même microprocesseur après que ladite opération complexe est terminée. Pendant l'exécution de l'opération complexe par le microprocesseur 13, le circuit 18 transmet périodiquement le signal d'interruption SI à une entrée d'interruption 13a du microprocesseur. En réponse à la réception du signal SI, le microprocesseur 13 interrompt immédiatement le déroulement de l'opération complexe en cours, et exécute un programme spécifique d'interruption, également appelé routine d'interruption, commandant l'envoi par le microprocesseur d'un signal de relance SR. Conformément à la norme ISO 7816-3, le signal SR se présente sous la forme d'un octet appelé "octet NUL" ayant la valeur hexadécimale "60". Le signal SR est dirigé vers l'interface 11 à travers le circuit de transmission 12, pour être transmis au terminal de lecture de la puce électronique et reconnu par celui-ci. Le terminal réinitialise ensuite le temps de réponse alloué à la carte et attend de nouveau la réponse. Dans le même temps, le microprocesseur 13 reprend l'opération complexe. Si, à l'expiration de la période de temps entre deux signaux d'interruption SI successifs, l'opération complexe n'est pas terminée, un nouveau signal d'interruption SI est émis afin que le microprocesseur envoie un nouveau signal de relance SR à destination du terminal, et ainsi de suite jusqu'à la fin de l'opération complexe.

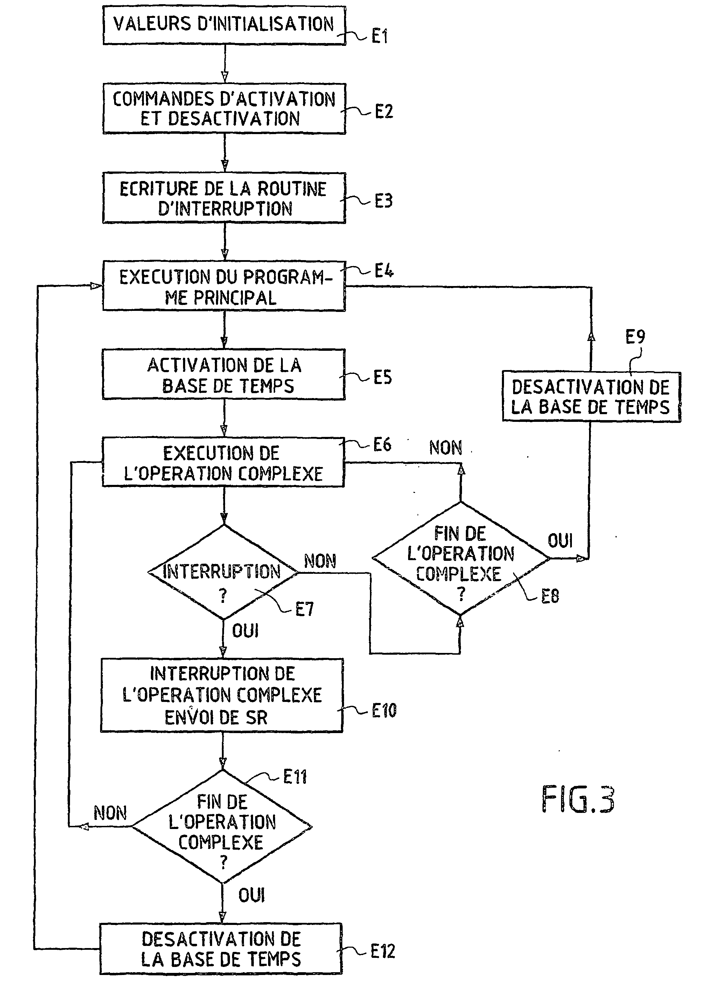

La figure 3 montre plus en détail le procédé mis en oeuvre selon le premier mode de réalisation de la présente l'invention, et utilisant la puce électronique 10 illustrée à la figure 2.

Les étapes E1 à E3 du procédé montré à la figure 3 sont réalisées préalablement à l'implantation du système opératoire dans la puce 10, c'est-à-dire lors du développement même de ce système opératoire.

Les étapes suivantes E4 à E12 sont mises en oeuvre par le microprocesseur 13 de la puce 10 après que le système opératoire a été définitivement installé dans la puce.

A l'étape E1, des valeurs d'initialisation du circuit de base de temps 18 sont introduites dans le code source du système opératoire. En particulier, la fréquence temporelle du circuit 18 est définie de telle sorte que la période de temps entre deux signaux d'interruption SI successifs soit sensiblement inférieure au temps de réponse alloué à la puce électronique.

A l'étape E2, des commandes d'activation et des commandes de désactivation du circuit 18 sont insérées dans le code source du système opératoire de la puce. Les commandes d'activation sont introduites dans des parties du code source correspondant chacune au début d'un traitement ou d'une opération complexe à effectuer par le microprocesseur. Les commande de désactivation sont introduites dans des parties du code source correspondant chacune à la fin d'un traitement ou opération complexe.

A l'étape E3, la routine d'interruption précitée est écrite en tant que sous-programme du système opératoire. Comme expliqué précédemment, la routine d'interruption, lorsqu'elle est activée par le programme principal du système opératoire, commande l'envoi du signal de relance SR vers l'interface 11.

A l'étape E4, après insertion de la carte à puce dans le terminal ou introduction de la carte à puce dans le champ électromagnétique du terminal, le microprocesseur 13, de même que les autres circuits de la puce, est alimenté électriquement ou électromagnétiquement par le terminal. Le microprocesseur exécute alors le programme principal du système opératoire stocké dans la mémoire morte 15.

A l'étape E5, avant de commencer, par exemple sur commande du terminal, l'exécution d'un sous-programme du système opératoire, correspondant à une opération complexe, le microprocesseur détecte une commande d'activation, et active en conséquence le circuit de base de temps 18 via le bus 17, en mettant à "1" un drapeau d'activation dans le circuit 18. Le circuit de base de temps 18 ainsi activé est apte à délivrer périodiquement le signal d'interruption SI, selon la fréquence temporelle définie dans les valeurs d'initialisation introduites à l'étape E2.

A l'étape E6, le microprocesseur commence l'exécution de l'opération complexe.

A l'étape E7, le microprocesseur scrute son entrée d'interruption 13a. Si aucun signal d'interruption SI n'est parvenu à l'entrée 13a, et si l'opération complexe n'est pas encore terminée (étape E8), celle-ci est poursuivie à l'étape E6. Si, à l'étape E8, l'opération complexe est terminée, le microprocesseur désactive le circuit de base de temps 18 par mise à "0" du drapeau d'activation (étape E9), et revient au programme principal du système opératoire (étape E4).

Si, en revanche, l'entrée 13a a reçu un signal d'interruption SI, le microprocesseur 13 interrompt l'opération complexe (étape E10). Puis il exécute la routine d'interruption décrite plus haut, pour commander l'envoi par le microprocesseur du signal, ou octet, de relance SR destiné au terminal de lecture de la carte à puce.

Si, à l'étape E11, l'opération complexe n'est pas terminée, l'algorithme revient à l'étape E6. Si l'opération complexe est terminée à l'étape E11, le microprocesseur 13, détectant une commande de désactivation dans le code source, désactive le circuit de base de temps 18 en mettant à "0" son drapeau d'activation (étape E12), puis revient au programme principal du système opératoire (étape E4).

Ainsi, selon l'invention, les instants auxquels le signal de relance SR est envoyé vers le terminal sont déterminés par le circuit de base de temps 18, c'est-à-dire un circuit distinct du microprocesseur 13. Lorsqu'il est actif, le circuit 18 émet périodiquement le signal de relance SR, indépendamment de l'opération complexe que le microprocesseur 13 est en train d'exécuter. Le microprocesseur 13 n'interrompt l'opération complexe que suite à un événement extérieur, à savoir l'émission du signal d'interruption SI, déclenché par le circuit 18. De cette manière, il est possible de définir très précisément les instants auxquels le signal de relance SR doit être envoyé au terminal, de sorte que le risque de voir le terminal couper l'alimentation de la puce en raison d'un dépassement du temps de réponse autorisé est supprimé.

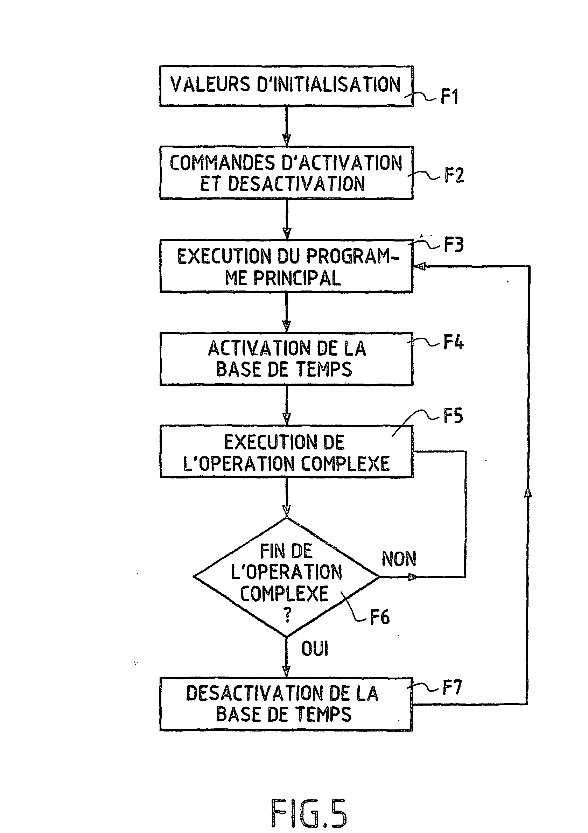

La figure 4 représente une puce électronique 20 selon un second mode de réalisation de la présente invention. La puce électronique 20 comprend notamment une interface 21, un circuit de transmission 22, un microprocesseur 23, et des mémoires 24, 25, 26. Les éléments 21 à 26 sont identiques aux éléments 11 à 16 illustrés à la figure 2, et sont agencés entre eux de la même manière.

La puce électronique 20 diffère de la puce 10 selon le premier mode de réalisation de l'invention essentiellement en ce que le circuit de base de temps 28, identique au circuit 18 de la figure 2, est relié au microprocesseur 23 uniquement par l'intermédiaire du bus 27, au même titre que les mémoires 24, 25, 26. Ainsi, la liaison directe 18a qui existait entre le circuit de base de temps 18 et le microprocesseur 13 est supprimée. Le circuit 28 est en revanche relié à un circuit de codage 29, lui-même connecté au circuit de transmission 22.

Le microprocesseur 23 active et désactive le circuit de base de temps 28 respectivement au début et à la fin d'une opération complexe. Pendant le temps où le circuit 28 est actif, celui-ci délivre périodiquement un signal SI', par exemple identique au signal SI de la figure 2. Le signal SI' est reçu par le circuit de codage 29, pour être converti en un signal SR' dont le format est reconnaissable par le terminal de lecture de la carte à puce. Le signal SR' constitue le signal de relance destiné à indiquer au terminal que la carte à puce est en fonctionnement, et se présente sous la même forme que le signal SR de la figure 2.

Dans l'exemple montré à la figure 4, les circuits 28 et 29 sont distincts l'un de l'autre. En variante toutefois, ils peuvent être combinés en un circuit unique produisant le signal de relance SR'.

La puce 20 selon le second mode de réalisation présente l'avantage, par rapport au premier mode de réalisation, de permettre l'envoi d'un signal de relance sans interrompre l'exécution de l'opération complexe par le microprocesseur 23. Dans ce second mode de réalisation en effet, l'envoi du signal de relance est effectué parallèlement à l'opération complexe.

La figure 5 montre plus en détail le procédé mis en oeuvre selon le second mode de réalisation de la présente l'invention, et utilisant la puce électronique 20 illustrée à la figure 4.

Les étapes F1 et F2 du procédé montré à la figure 5 sont réalisées préalablement à l'implantation du système opératoire dans la puce 20, c'est-à-dire lors du développement même de ce système opératoire.

Les étapes suivantes F3 à F7 sont mises en oeuvre par le microprocesseur 23 de la puce 20 après que le système opératoire a été définitivement installé dans la puce.

Les étapes préliminaires F1 et F2 consistent respectivement à introduire dans le système opératoire de la puce des valeurs d'initialisation du circuit de base de temps 28 et des commandes d'activation et de désactivation de ce circuit, de façon comparable aux étapes E1 et E2 du premier mode de réalisation.

A l'étape suivante F3, lorsque la puce électronique 20 est connectée au terminal par insertion dans celui-ci de la carte à puce correspondante ou par introduction de la carte à puce dans le champ électromagnétique du terminal, le microprocesseur 23 exécute le programme principal du système opératoire.

A une étape F4, avant de commencer l'exécution d'un sous-programme du système opératoire, correspondant à une opération complexe, le microprocesseur détecte une commande d'activation, et active en conséquence le circuit de base de temps 28 via le bus 27, en mettant à "1" un drapeau d'activation dans le circuit 28.

A une étape F5, le microprocesseur commence l'exécution de l'opération complexe.

Lorsque l'opération complexe est terminée (étapes F6, F7), le microprocesseur désactive le circuit de base de temps 28, puis revient au programme principal du système opératoire (étape F3).

Pendant tout le temps où le circuit de base de temps 28 est actif, c'est-à-dire entre les étapes F4 et F7, celui-ci émet périodiquement le signal SI' vers le circuit de codage 29. En réponse à la réception du signal SI', le circuit de codage 29 transmet le signal de relance SR' vers l'interface 21 à travers le circuit de transmission 22.

La présente invention a été décrite ci-dessus à titre d'exemple uniquement dans le contexte d'une carte à puce. Toutefois, il apparaîtra clairement à l'homme du métier que la puce électronique selon l'invention peut être associée à d'autres objets portatifs, tels qu'une carte enfichable de format "plug-in" ou une bague.

## Revendications

1. Puce électronique (10 ; 20) comprenant une interface (11 ; 21) lui permettant de communiquer avec un terminal, et un circuit de traitement (13 ; 23) capable d'effectuer un traitement après mise en communication de la puce et du terminal, **caractérisée en ce qu'**elle comprend en outre :
un circuit de base de temps (18 ; 28), relié au circuit de traitement (13 ; 23), pour produire un premier signal (SI ; SI') à au moins un instant donné si, à cet instant, ledit traitement n'est pas encore terminé, et
un moyen (13 ; 29) pour transmettre vers l'interface, en réponse au premier signal, un second signal (SR ; SR'), destiné à indiquer au terminal que la puce est en fonctionnement.

2. Puce électronique selon la revendication 1, **caractérisée en ce que** le circuit de traitement (13 ; 23) est adapté pour activer le circuit de base de temps (18 ; 28) sensiblement au début dudit traitement.

3. Puce électronique selon la revendication 1 ou 2, **caractérisée en ce que** le circuit de traitement (13 ; 23) est adapté pour désactiver le circuit de base de temps (18 ; 28) sensiblement à la fin dudit traitement.

4. Puce électronique selon l'une quelconque des revendications 1 à 3, **caractérisée en ce que** le circuit de base de temps (18 ; 28) est adapté pour produire le premier signal de manière périodique.

5. Puce électronique selon la revendication 4, **caractérisée en ce que** la période de temps entre deux émissions successives, par le circuit de base de temps (18 ; 28), du premier signal (SI ; SI') est inférieure à un temps de réponse prédéterminé, alloué à la puce électronique pour répondre au terminal.

6. Puce électronique selon l'une quelconque des revendications 1 à 5, **caractérisée en ce que** ledit moyen pour transmettre le second signal vers
l'interface comprend le circuit de traitement (13), relié au circuit de base de temps (18) de telle manière à pouvoir recevoir le premier signal (SI).

7. Puce électronique selon la revendication 6, **caractérisée en ce que** le circuit de traitement (13) est adapté pour interrompre le traitement en réponse à la réception du premier signal (SI), pour envoyer le second signal (SR) vers l'interface (11), et pour ensuite reprendre le traitement.

8. Puce électronique selon l'une quelconque des revendications 1 à 5, **caractérisée en ce que** ledit moyen (29) pour transmettre le second signal (SR') vers l'interface (21) est distinct du circuit de traitement (23).

9. Puce électronique selon la revendication 8, **caractérisée en ce que** ledit moyen pour transmettre le second signal vers l'interface comprend un circuit de codage (29) pour convertir le premier signal (SI'), reçu du circuit de base de temps (28), en un signal (SR') reconnaissable par le terminal, constituant le second signal.

10. Puce électronique selon l'une quelconque des revendications 1 à 9, **caractérisée en ce que** le circuit de traitement est un microprocesseur (13 ; 23).

11. Puce électronique selon la revendication 10, **caractérisée en ce que** le circuit de base de temps (18) est relié à un bus (17) de la puce, auquel sont également connectés le microprocesseur (13) et des mémoires (14, 15, 16) associées au microprocesseur, et **en ce que** le circuit de base de temps (18) est également relié au microprocesseur (13) par une ligne directe (18a), apte à transmettre le premier signal (SI) du circuit de base de temps au microprocesseur, et connectée, au niveau du microprocesseur, à une entrée d'interruption (13a).

12. Puce électronique selon la revendication 10 ou 11, **caractérisée en ce que** le microprocesseur (13) est programmé pour exécuter une routine d'interruption, en réponse à la réception du premier signal (SI), pour interrompre le traitement.

13. Puce électronique selon l'une quelconque des revendications 1 à 12, **caractérisée en ce que** le circuit de traitement est adapté pour effectuer le traitement en réponse à une commande envoyée par le terminal.

14. Carte à puce comprenant une puce électronique telle que définie dans l'une quelconque des revendications 1 à 13.

15. Procédé pour transmettre un signal de relance à un terminal à partir d'une puce électronique, ladite puce électronique (10 ; 20) comprenant un moyen (11 ; 21) lui permettant de communiquer avec le terminal et un circuit de traitement (13 ; 23), le procédé étant **caractérisé en ce qu'**il comprend les étapes suivantes :
mettre en communication la puce électronique et le terminal,
produire un premier signal (SI ; SI') à partir d'un circuit de base de temps (18 ; 28) relié au circuit de traitement (13 ; 23), à au moins un instant donné au cours d'un traitement effectué par le circuit de traitement, et
transmettre vers le terminal, en réponse au premier signal (SI ; SI'), un second signal (SR ; SR'), destiné à indiquer au terminal que la puce est en fonctionnement.

## Patentansprüche

1. Elektronischer Chip (10; 20) mit einer Schnittstelle (11; 21) zum Kommunizieren mit einem Endgerät, sowie einer Bearbeitungsschaltung (13; 23), die zur Ausführung einer Bearbeitung nach der Kommunikationsherstellung zwischen dem Chip und dem Endgerät fähig ist, **dadurch gekennzeichnet, dass** er zudem folgendes umfasst:
eine mit der Bearbeitungsschaltung (13; 23) verbundene Taktgeberschaltung (18; 28) zur Erzeugung eines ersten Signals (SI; SI') zu mindestens einem bestimmten Zeitpunkt, wenn zu diesem Zeitpunkt die besagte Bearbeitung noch nicht abgeschlossen ist, und
ein Mittel (13; 29) zum Übertragen an die Schnittstelle eines zweiten Signals (SR; SR') als Antwort auf das erste Signal, das dazu bestimmt ist dem Endgerät anzuzeigen, dass der Chip in Betrieb ist.

2. Elektronischer Chip nach Anspruch 1, **dadurch gekennzeichnet, dass** die Bearbeitungsschaltung (13; 23) zum Aktivieren der Taktgeberschaltung (18; 28) ungefähr zu Beginn der besagten Bearbeitung geeignet ist.

3. Elektronischer Chip nach Anspruch 1 oder 2, **dadurch gekennzeichnet, dass** die Bearbeitungsschaltung (13; 23) zum Deaktivieren der Taktgeberschaltung (18; 28) ungefähr am Ende der besagten Bearbeitung geeignet ist.

4. Elektronischer Chip nach einem beliebigen der Ansprüche 1 bis 3, **dadurch gekennzeichnet, dass** die Taktgeberschaltung (18; 28) zur regelmäßigen Erzeugung des ersten Signals geeignet ist.

5. Elektronischer Chip nach Anspruch 4, **dadurch gekennzeichnet, dass** der Zeitraum zwischen zwei aufeinander folgenden Abgaben durch die Taktgeberschaltung (18; 28) des ersten Signals (SI; SI') kürzer ist als eine vorbestimmte Antwortzeit, die dem elektronischen Chip eingeräumt wird, um dem Endgerät zu antworten.

6. Elektronischer Chip nach einem beliebigen der Ansprüche 1 bis 5, **dadurch gekennzeichnet, dass** das Mittel zum Übertragen des zweiten Signals an die Schnittstelle die Bearbeitungsschaltung (13) umfasst, die so mit der Taktgeberschaltung (18) verbunden ist, dass sie das erste Signal (SI) empfangen kann.

7. Elektronischer Chip nach Anspruch 6, **dadurch gekennzeichnet, dass** die Bearbeitungsschaltung (13) zum Unterbrechen der Bearbeitung als Antwort auf den Empfang des ersten Signals (SI), sowie zum Senden des zweiten Signals (SR) an die Schnittstelle (11) und zur anschließenden Wiederaufnahme der Bearbeitung geeignet ist.

8. Elektronischer Chip nach einem beliebigen der Ansprüche 1 bis 5, **dadurch gekennzeichnet, dass** sich das Mittel (29) zum Übertragen des zweiten Signals (SR') an die Schnittstelle (21) von der Bearbeitungsschaltung (23) unterscheidet.

9. Elektronischer Chip nach Anspruch 8, **dadurch gekennzeichnet, dass** das Mittel zum Übertragen des zweiten Signals an die Schnittstelle eine Codierschaltung (29) umfasst, die das von der Taktgeberschaltung (28) erhaltene erste Signal (SI') in ein durch das Endgerät erkennbares Signal (SR') umwandelt, welches das zweite Signal bildet.

10. Elektronischer Chip nach einem beliebigen der Ansprüche 1 bis 9, **dadurch gekennzeichnet, dass** die Bearbeitungsschaltung ein Mikroprozessor (13; 23) ist.

11. Elektronischer Chip nach Anspruch 10, **dadurch gekennzeichnet, dass** die Taktgeberschaltung (18) mit einem Bus (17) des Chips verbunden ist, mit dem auch der Mikroprozessor (13) und dem Mikroprozessor zugeordnete Speicher (14, 15, 16) verbunden sind, sowie dadurch, dass die Taktgeberschaltung (18) auch über eine direkte Leitung (18a) mit dem Mikroprozessor (13) verbunden ist, die zum Übertragen des ersten Signals (SI) von der Taktgeberschaltung an den Mikroprozessor geeignet ist und im Bereich des Mikroprozessors an einen Unterbrechungseingang (13a) angeschlossen ist.

12. Elektronischer Chip nach Anspruch 10 oder 11, **dadurch gekennzeichnet, dass** der Mikroprozessor (13) zur Ausführung einer Unterbrechungsroutine als Antwort auf den Eingang des ersten Signals (SI) programmiert ist, um die Bearbeitung zu unterbrechen.

13. Elektronischer Chip nach einem beliebigen der Ansprüche 1 bis 12, **dadurch gekennzeichnet, dass** die Bearbeitungsschaltung zur Durchführung der Bearbeitung als Antwort auf einen vom Endgerät gesendeten Befehl geeignet ist.

14. Chipkarte mit einem wie in einem beliebigen der Ansprüche 1 bis 13 definierten elektronischen Chip.

15. Verfahren zum Übertragen eines Wiederanlaufsignals ausgehend von einem elektronischen Chip an ein Endgerät, wobei der elektronische Chip (10; 20) ein Mittel umfasst (11; 21), durch das er mit dem Endgerät kommunizieren kann, sowie eine Bearbeitungsschaltung (13; 23), **dadurch gekennzeichnet, dass** es folgende Schritte umfasst:
Herstellen einer Kommunikation zwischen dem elektronischen Chip und dem Endgerät,
Erzeugen eines ersten Signals (SI; SI') ausgehend von einer mit der Bearbeitungsschaltung (13; 23) verbundenen Taktgeberschaltung (18; 28) zu mindestens einem bestimmten Zeitpunkt während einer von der Bearbeitungsschaltung durchgeführten Bearbeitung, und
Übertragen an das Endgerät eines zweiten Signals (SR; SR') als Antwort auf das erste Signal (SI; SI'), um dem Endgerät anzuzeigen, dass der Chip in Betrieb ist.

## Claims

1. Electronic chip (10; 20) comprising an interface (11; 21) enabling it to communicate with a terminal and a processing circuit (13; 23) capable of performing processing after a link has been set up between the chip and the terminal, **characterised in that** it also comprises:
a time base circuit (18; 28), connected to the processing circuit (13; 23), for generating a first signal (SI; SI') during at least one given moment if processing has not yet been completed at the said moment, and
a means (13; 29) of transmitting to the interface, in response to the first signal, a second signal (SR; SR') with the purpose of indicating to the terminal that the chip is operating.

2. Electronic chip according to claim 1, **characterised in that** the processing circuit (13; 23) is adapted to activate the time base circuit (18; 28) approximately at the start of the said processing.

3. Electronic chip according to claim 1 or 2, **characterised in that** the processing circuit (13; 23) is adapted to deactivate the time base circuit (18; 28) approximately at the end of the said processing.

4. Electronic chip according to any of claims 1 to 3, **characterised in that** the time base circuit (18; 28) is adapted to generate the first signal periodically.

5. Electronic chip according to claim 4, **characterised in that** the time period between two successive transmissions, by the time base circuit (18; 28), of the first signal (SI; SI') is less than a predetermined response time, allocated to the electronic chip to reply to the terminal.

6. Electronic chip according to any of claims 1 to 5, **characterised in that** the said means of transmitting the second signal to the interface comprises the processing circuit (13), connected to the time base circuit (18) so as to be able to receive the first signal (SI).

7. Electronic chip according to claim 6, **characterised in that** the processing circuit (13) is adapted to interrupt the processing in response to the reception of the first signal (SI), to transmit the second signal (SR) to the interface (11) and then resume the processing.

8. Electronic chip according to any of claims 1 to 5, **characterised in that** the said means (29) of transmitting the second signal (SR') to the interface (21) is separate from the processing circuit (23).

9. Electronic chip according to claim 8, **characterised in that** the said means of transmitting the second signal to the interface comprises an encoding circuit (29) to convert the first signal (SI'), received from the time base circuit (28), into a signal (SR') which can be recognised by the terminal, forming the second signal.

10. Electronic chip according to any of claims 1 to 9, **characterised in that** the processing circuit is a microprocessor (13; 23).

11. Electronic chip according to claim 10, **characterised in that** the time base circuit (18) is connected to a bus (17) of the chip, to which the microprocessor (13) and memories (14, 15, 16) associated with the microprocessor are also connected and **in that** the time base circuit (18) is also connected to the microprocessor (13) by a direct line (18a), which can transmit the first signal (SI) of the time base circuit to the microprocessor and connected, in the microprocessor, to an interrupt input (13a).

12. Electronic chip according to claim 10 or 11, **characterised in that** the microprocessor (13) is programmed to execute an interrupt routine, in response to the reception of the first signal (SI), to interrupt the processing.

13. Electronic chip according to any of claims 1 to 12, **characterised in that** the processing circuit is adapted to carry out the processing in response to a command sent by the terminal.

14. Smartcard comprising an electronic chip as defined in any of claims 1 to 13.

15. Method to transmit a restart signal to a terminal from an electronic chip, the said electronic chip (10; 20) comprising a means (11; 21) enabling it to communicate with the terminal and a processing circuit (13; 23), the method being **characterised in that** it comprises the following steps:
set up a link between the electronic chip and the terminal,
generate a first signal (SI; SI') from a time base circuit (18; 28) connected to the processing circuit (13; 23) during at least one given moment during a processing carried out by the processing circuit, and
transmit to the terminal, in response to the first signal (SI; SI'), a second signal (SR; SR') with the purpose of indicating to the terminal that the chip is operating.
